# EUROPEAN PATENT APPLICATION

(11) **EP 2 501 013 A2**
(43) Date of publication of application: **19.09.2012**
(21) Application number: 12159290.1
(22) Date of filing: 13.03.2012
(51) Int. Cl.: H02J 3/18

(54) **Electrical accumulator units with safe turn-off**

(30) Priority: 15.03.2011 US 201113048286
(71) Applicant: Hamilton Sundstrand Corporation, Windsor Locks, CT 06096-1010 (US)
(72) Inventor: Nguyen, Vietson M., Rockford, IL Illinois 61114 (US)
(74) Representative: Hughes, Andrea Michelle

(57) **Abstract**

electrical accumulator unit includes a power storage device 26, a first switch 28, a power converter 30, a controller 34, and a dissipation circuit 36 for dissipating energy remnant in the power converter when the electrical accumulator unit is turned Off. The first switch connects the power device to the power converter, which includes at least a second switch that is selectively turned On and Off to regulate the transfer of power between the power storage device and an output of the electrical accumulator unit. The controller turns Off the electrical accumulator device by turning Off the first switch, thereby disconnecting the power storage device from the power converter, and turning On the second switch to connect the dissipation circuit to the power converter in a recirculation circuit path that dissipates energy stored in the power converter.

## Description

### BACKGROUND

The present application is directed toward power generation systems, and more particularly toward a power generation system using an electrical accumulator unit.

Electrical accumulator units are bi-directional systems for transferring power between power sources. Aircraft power generator systems oftentimes employ electrical accumulator units as part of the power generation system. An on-board generator converts mechanical energy provided by the engine to electrical energy for supply to various electrical loads. During normal operations, electrical accumulator units transfer excess power provided on the bus (either excess power provided by the generator due to a demand to be charged by the power storage components or regenerative power provided by the one or more active loads) to a power storage device for storage. The power storage device may be a battery, super-capacitor, or some other device capable of storing the excess energy. In response to a spike in power required by the load, the electrical accumulator units provide energy stored by the power storage device onto the bus for supply to the one or more loads.

### SUMMARY

An electrical accumulator unit includes a power storage device, a first switch, a power converter, a controller, and a dissipation circuit for dissipating residual energy in the power converter when the electrical accumulator unit is turned Off. The first switch is connected between the power storage device and the power converter. The power converter is connected via the first switch to the power storage device, the power converter including at least a second switch that is selectively turned On and Off to regulate the transfer of power between an output of the electrical accumulator unit and the power storage device. The dissipation circuit is connected to the power converter. The controller controls the state of the first switch and the second switch, wherein the controller turns the electrical accumulator Off by turning Off the first switch to disconnect the power storage device from the power converter, and tu the second switch On to connect the dissipation circuit to the power converter in a recirculating circuit path that dissipates energy stored in the power converter.

### BRIEF DESCRIPTION OF THE DRAWINGS

FIG. 1 is a functional block diagram of a power generating system according to an embodiment of the present invention.

FIG. 2 is a circuit diagram of a boost-mode portion of an electrical accumulator unit (EAU) according to an embodiment of the present invention.

FIG. 3 is a circuit diagram of a boost-mode portion of an electrical accumulator unit (EAU) according to another embodiment of the present invention.

### DETAILED DESCRIPTION

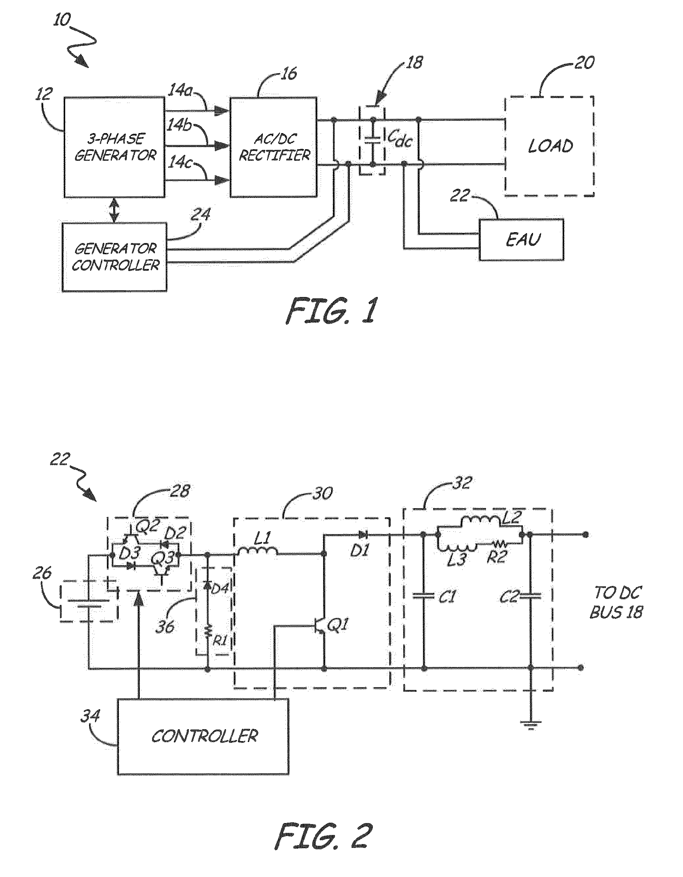

FIG. 1 is a functional block diagram of power generating system 10 according to an embodiment of the present invention. Power generating system 10 includes three phase generator 12 connected via three phase outputs 14a, 14b, and 14c to supply power to AC/DC rectifier 16. Three phase generator 12 may also be referred to as generator 12. The AC/DC rectifier 16 converts the generate three phase power into DC power, and outputs the DC power to DC bus 18 (illustrated at DC link capacitor Cdc). Load 20 is connected to receive DC power from DC bus 18. Additionally connected to the DC power bus 18 is electrical accumulator unit (EAU) 22. Generator controller 24 is connected to three phase generator 12, and provides control signals for controlling the generator. Generator controller 24 is also connected to the output of the AC/DC rectifier 16 via power sensors, and is capable of detecting the power output of AC/DC rectifier 16 and the power demands of the load 20.

Electrical accumulator unit 22 includes a power storage device (e.g., battery, super-capacitor, etc.) for storing energy. Electrical accumulator unit 22 provides for bi-directional power transfer between DC bus 18 and the power storage device. In instances in which excess power is available on DC bus 18, electrical accumulator unit 22 transfers power from DC bus 18 to the power storage device. This may be in response to three phase generator 12 generating excess power due to a demand to be charged by the energy storage device or in response to load 20 providing regenerative power back onto DC bus 18. Conversely, when power on DC bus 18 is insufficient, electrical accumulator unit 22 transfer power from the power storage device to DC bus 18 to augment the power provided by three-phase generator 12 and AC/DC rectifier 16.

FIG. 2 is a circuit diagram of electrical accumulator unit 22 according to an embodiment of the present invention. Electrical accumulator unit 22 includes power storage device 26, bi-directional switch 28, power converter 30, filter circuit 32, controller 34 and dissipation circuit 36.

In applications in which the voltage supplied by power storage device 26 is less than the voltage provided on DC bus 18, electrical accumulator unit 22 includes a boost converter to increase or step-up the magnitude of the voltage supplied by power storage device 26 to DC bus 18. In the embodiment shown in FIG. 2, a simple boost converter comprising inductor L1, diode D1 and switch Q1 is employed. In other embodiments, the boost converter may be implemented in parallel with other well-known DC-DC converter topologies, such as buck converters, buck-boost converters, etc., as well as combinations of several different types of converters. Controller 34 provides control signals to switch Q1, causing switch Q1 to selectively turn On and Off. When On, power supplied by power storage device 26 flows through a first circuit path that includes inductor L1 and switch Q1, causing inductor L1 to charge. When switch Q1 is turned Off, energy stored in inductor L1 is discharged through a second circuit path that includes diode D1 and filter circuit 32 to DC bus 18. By selectively turning switch Q1 On and Off, power is transferred from power storage device 26 to DC bus 18. Filter circuit 32 includes inductors L2 and L3, resistor R2 and capacitors C1 and C2 connected to provide a filtered DC output to DC bus 18.

Controller 34 controls the operation of switch Q l , as well as the operation of bi-directional switch 28, which includes switches Q2 and Q3, and diodes D2 and D3. To transfer power from power storage device 26 to DC bus 18, controller 34 turns On switch Q3, and controls switch Q1 to be On and Off as required to provide the desired boost voltage onto DC bus 18. In one embodiment, controller 34 turns switch Q1 On and Off using pulse width modulation (PWM techniques). For the sake of simplicity, only the boost converter is shown in the circuit illustrated in FIG. 2. In addition, to transfer power from DC bus 18 to power storage device 26, a buck converter (not shown) would be included to step down the voltage provided by DC bus 18, or a buck-boost converter may be employed to both step-up and step-down the voltage. Controller 34 would control the operation of the buck converter to transfer power from DC bus 18 to the energy storage device 26. Controller 34 would likewise close switch Q2 and open switch Q3 to allow power to be transferred from DC bus 18 to power storage device 26.

Electrical accumulator unit 22 is turned Off following operation of the power converter 30 to transfer power from power storage device 26 to DC bus 18, or to transfer power from DC bus 18 to power storage device 26. Traditionally, power converter 30 is turned Off by turning Off switch Q1 and/or bi-directional switch 28. However, this method of turn-off results in residual energy stored in inductor L1 at the time of turn-off being discharged onto DC bus 18, potentially with undesirable effects.

To mitigate the effects of remnant energy at turn-off of electrical accumulator unit 22, dissipation circuit 36 is connected to power converter 30. Assuming operation in the boost mode, in which power is being transferred from power storage device 26 to DC bus 18, when the operation is complete controller disconnects power storage device 26 from DC bus 18 by opening bi-directional switch 28 (e.g., turning Off switch Q3). Excess power stored in inductor L1 is dissipated by closing (or maintaining in a closed state) switch Q1 to create a recirculation circuit path that includes inductor L1, switch Q1, and dissipation circuit 36 (including resistor R1 and diode D4, which is forward biased or conducting in the recirculation circuit path). In this way, excess energy stored in inductor L1 is prevented from being discharged onto DC bus 18 when bi-directional switch 28 is turned Off.

Controller 34 may maintain switch Q1 in an On state for a defined period of time known to be of sufficient duration to dissipate excess energy, or may monitor the power dissipated by dissipation circuit 36 to determine when it is safe to switch Q1 Off. In some embodiments, depending on the amount of energy to be dissipated, free-wheeling diode D4 may be sufficiently capable of dissipating energy stored in inductor L1. In this embodiment, energy-dissipating resistor R1 would not be required as part of dissipation circuit 36.

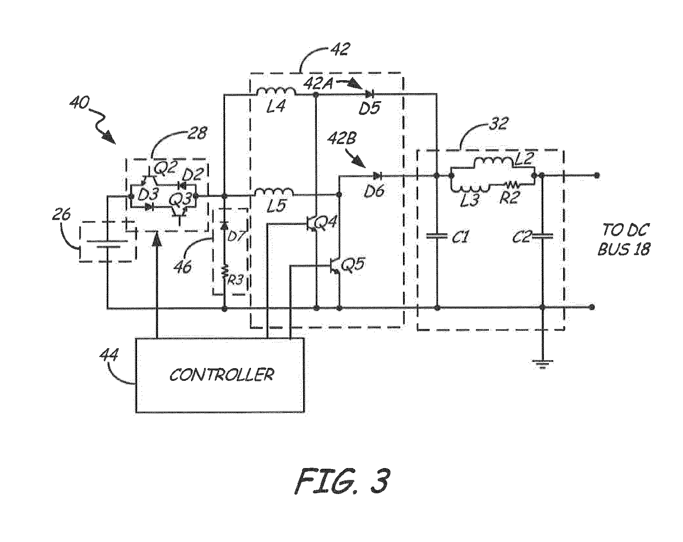

FIG. 3 is a circuit diagram of an electrical accumulator unit according to another embodiment of the present invention. As with the embodiment shown in FIG. 2, electrical accumulator unit 40 includes power source 26, bi-directional switch 28, input filter 32, and dissipation circuit 46. In contrast with the embodiment shown in FIG. 2, power converter 42 is implemented as a modular power converter that includes a plurality of individual power converters 42a, 42b connected in parallel with one another. Power converter 42a includes inductor L4, diode D5, and switch Q4, while power converter 42b includes inductor 1.5, diode D6, and switch Q5. Controller 44 generates control signals provided to bi-directional switch 28, as well as switches Q4 and Q5. Based on the control signals provided by controller 44, power converters 42a and 42b may be phase-shifted with respect to one another to reduce the ripples at the input and/or output of the electrical accumulator unit 22.

In the embodiment shown in FIG. 3, bi-directional switch 28 and dissipation circuit 46, which includes diodes D7 and resistor R3, are connected in common with power converters 42a and 42b. Controller 44 turns Off electrical accumulator unit 44 by turning Off bi-directional switch 28 to disconnect power storage device 26 from power converter 42 and turning On each of the plurality of switches Q4, Q5 associated with power converters 42a, 42b respectively, to create a recirculation circuit path that includes dissipation circuit 46. Controller maintains switches Q5 and Q6 is an On state for at least an amount of time required to dissipate excess energy stored in inductors L4 and L5.

In the embodiment shown in FIG. 3, dissipation circuit 46 is connected in common with each of the plurality of modular power converters 42a, 42b. In other embodiment, each modular power converter 42a, 42b may include its own separate dissipation circuit.

While the invention has been described with reference to an exemplary embodiment(s), it will be understood by those skilled in the art that various changes may be made and equivalents may be substituted for elements thereof without departing from the scope of the invention. In particular, the present invention has been described with respect to a particular DC-DC circuit topology. However, it will be understood by those of skill in the art that other well-known DC-DC circuit topologies finding applicability to electrical accumulator units may be employed without departing from the scope of the invention. In addition, many modifications may be made to adapt a particular situation or material to the teachings of the invention without departing from the essential scope thereof. For example, depending on the circuit topology employed, the location of certain circuit elements, such as inductive and switching elements within a converter, may change, without departing from the essential scope of the present invention. Therefore, it is intended that the invention not be limited to the particular embodiment(s) disclosed, but that the invention will include all embodiment falling within the scope of the appended claims.

## Claims

1. An electrical accumulator unit comprising:
a power storage device (26);
a first switch (28) connected to the power storage device;
a power converter (30) connected to communicate power between the power storage device and an output of the electrical accumulator unit, the power converter connected to the power storage device via the first switch, the power converter including a second switch that is selectively turned On and Off to regulate the communication of power between the power storage device and the output of the electrical accumulator unit;
a dissipation circuit (36) connected to the power converter; and
a controller (34) connected to control a state of the first switch and a state of the second switch, wherein the controller turns the electrical accumulator unit Off by turning Off the first switch to disconnect the power storage device from the power converter, and turns the second switch On to connect the dissipation circuit to the power converter in a recirculation circuit path that dissipates energy stored in the power converter.

2. The electrical accumulator unit of claim 1, wherein the first switch is a bi-directional switch that allows power to be provided to and supplied from the power storage device.

3. The electrical accumulator unit of claim 1, wherein the power converter is selected from a group consisting of a boost converter, a buck converter, a buck-boost converter, and combinations thereof to provide bi-directional transfer of power between the power storage device and the output of the electrical accumulator unit.

4. The electrical accumulator unit of claim 1, wherein the dissipation circuit includes a diode connected to be forward biased when connected in the recirculation circuit path.

5. The electrical accumulator unit of claim 4, wherein the dissipation circuit includes a resistor connected in series with the diode.

6. The electrical accumulator unit of claim 1, wherein the power converter includes a plurality of modular power converters connected in parallel, each modular power converter including a switch that is selectively turned On and Off by the controller to regulate power provided by the electrical accumulator unit.

7. The electrical accumulator unit of claim 6, wherein the controller turns the electrical accumulator unit Off by turning Off the first switch to disconnect the power storage device from the plurality of modular power converters, and turns the switch associated with each of the plurality of modular power converters On to connect the dissipation circuit to the power converter in a recirculation circuit path that dissipates energy stored in the power converter.

8. The electrical accumulator unit of claim 6, wherein each of the plurality of modular power converts includes a dissipation circuit, wherein the controller turns Off the first switch to disconnect the power storage device from the plurality of modular power converters, and turns the switch associated with each of the plurality of modular power converters On to connect each of the plurality of dissipation circuits associated with each of the plurality of modular power converters in a recirculation circuit path that dissipates energy stored in the power converter.

9. A method of preventing transient overcurrent at an output of an electrical accumulator unit that includes a power storage device, a power converter, a dissipation circuit and a first switch connecting the power storage device and the power converter, wherein the power converter includes a second switch selectively turned On and Off to regulate the transfer of power to/from the power storage device, the method comprising:
turning Off the first switch to disconnect the power storage device from the power converter; and
turning On the second switch to connect the power converter to the dissipation circuit to dissipate energy stored in the power converter.

10. The method of claim 9, further including:
turning Off the second switch after excess energy has been dissipated by the dissipation circuit.

11. The method of claim 10, wherein the second switch is turned Off upon expiration of a period of time determined by the controller.

12. An electrical accumulator unit comprising:
a power storage device (26);
a first switch (28) connected to the power storage device;
a power converter (42) that includes a plurality of modular power converters (42a, 42b) connected in parallel with one another to transfer power between the power storage device and an output of the electrical accumulator unit, the power converter connected to the power storage device through the first switch, each of the plurality of modular power converters including a switch (Qu, Qs) that is selectively turned On and Off to regulate the transfer of power between the power storage device and the output of the electrical accumulator unit;
a dissipation circuit (46) connected to the power converter; and
a controller (44) connected to control a state of the first switch and each of the plurality of switches associated with the plurality of modular power converters, wherein the controller turns the electrical accumulator unit Off by turning Off the first switch to disconnect the power storage device from the power converter, and turns of the plurality of switches associated with the plurality of modular power converters to connect the dissipation circuit to the modular power converters in a recirculation circuit path that dissipates energy stored in the modular power converters.

13. a The electrical accumulator unit of claim 12, wherein the dissipation circuit includes a diode connected to be forward biased when connected in the recirculation circuit path.

14. The electrical accumulator unit of claim 12, the circuit include a plurality of individual dissipation circuits, each associated with one of the plurality of modular power converters,

15. a The electrical accumulator unit of claim 22, wherein the dissipation circuit includes a resistor connected in series with the diode.
